# EUROPÄISCHE PATENTSCHRIFT

(11) **EP 0 796 178 B1**
(45) Veröffentlichungstag und Bekanntmachung des Hinweises auf die Patenterteilung: **13.10.1999**
(21) Anmeldenummer: 95936984.4
(22) Anmeldetag: 25.11.1995
(51) Int. Cl.: B60R 16/02

(54) **SCHALTUNGSANORDNUNG FÜR IN EINEM KRAFTFAHRZEUG ANORDBARE FUNKTIONSMODULE**
CIRCUITRY FOR FUNCTION MODULES WHICH CAN BE FITTED IN A MOTOR VEHICLE
CIRCUITERIE POUR MODULES DE FONCTION POUVANT ETRE DISPOSES DANS UNE AUTOMOBILE

(30) Priorität: 19.12.1994 DE 4445110
(43) Veröffentlichungstag der Anmeldung: 24.09.1997
(73) Patentinhaber: ROBERT BOSCH GMBH, 70442 Stuttgart (DE)
(72) Erfinder: PETER, Cornelius, D-77815 Bühl (DE); KNECHT, Gerhard, D-76473 Iffezheim (DE); FRANKENHAUSER, Bruno, D-73033 Göppingen (DE); JAUERNIG, Peter, D-75233 Tiefenbronn (DE); FRIEDL, Bernhard, D-71272 Renningen (DE)
(86) Internationale Anmeldenummer: DE9501670
(87) Internationale Veröffentlichungsnummer: WO9619361

(56) Entgegenhaltungen:
- EP-A- 0 392 411
- EP-A- 0 470 056
- WO-A-89/03327
- WO-A-89/09146
- US-A- 4 825 362

## Beschreibung

Die Erfindung betrifft eine Schaltungsanordnung, insbesondere für in einem Kraftfahrzeug anordbare mit einer Spannungsversorgung und/oder einer Steuerschaltung verbindbare Funktionsmodule.

### Stand der Technik

Es ist bekannt in einem Kraftfahrzeug eine Vielzahl von Funktionsmodulen anzuordnen. Als Funktionsmodule seien beispielsweise Scheibenwischermotor für Front- oder Heckscheibe, Kraftfahrzeug-Außenbeleuchtung, Kraftfahrzeug-Innenbeleuchtung, Heckscheibenheizung, Motorkühlgebläse, Gebläsemotor für Heizung, Airbag-Ansteuerung, Zentralverriegelung, Sitzhöhenverstellung, elektrische Fensterheber, usw. genannt. Diese Aufzählung ist lediglich beispielhaft und soll die Vielzahl der möglichen Funktionsmodule eines Kraftfahrzeuges verdeutlichen. Zur Spannungsversorgung und Ansteuerung dieser Vielzahl von Funktionsmodulen ist es bekannt, in dem Kraftfahrzeug einen Kabelbaum zu verlegen, der die Verbindung der einzelnen Funktionsmodule mit einer Spannungsquelle, im Kraftfahrzeug in der Regel eine Kraftfahrzeugbatterie, sowie Bedienelementen und verschiedenen Sensoren ermöglicht. Aufgrund der Vielzahl der Verbindungswege und des unterschiedlichen Einbauortes der einzelnen Funktionsmodule umfaßt der für die Verdrahtung notwendige Kabelbaum eine Vielzahl von einzelnen Verbindungsadern. Neben den hiermit verbundenen hohen Aufwand der Verlegung des Kabelbaumes in dem Kraftfahrzeug ist nachteilig, daß ein einmal verlegter Kabelbaum für eine nachträgliche Nachrüstung von Funktionsmodulen in dem Kraftfahrzeug nicht ausgelegt ist. Die nachträglich eingebauten Funktionsmodule bedürfen einer kompletten neuen Verkabelung, womit ein relativ hoher Montageaufwand verbunden ist.

Darüber hinaus ist nachteilig, daß den einzelnen Funktionsmodulen nur eine begrenzte Informationsmenge über das Kraftfahrzeug, insbesondere über den derzeitigen Betriebszustand, äußere Bedingungen, usw. zur Verfügung stehen. Ein abgestimmtes Wirken der einzelnen Funktionsmodule auf einen sich ändernden Betriebszustand ist somit nicht möglich.

Aus der UB-A-4,825,362 ist ein Netzwerksystem für die Datenkommunikation in einem Kraftfahrzeug bekannt. Dieses Netzwerk beinhaltet eine Vielzahl von getrennten, unterschiedlichen Steuergeräten, die bestimmte Steuerfunktionen ausführen und über eine serielle Kommunikationsleitung Daten austauschen. Der Mastercomputer enthält eine Bedienerschnittstelle und eine Anzeige. Er steuert die Anzeige der beobachteten Daten der Steuergeräte. Die Anzeige ist in dem Mastercomputer integriert, so daß eine Anpassung an unterschiedliche Anforderungen an die Anzeige nur mit großem Aufwand vorgenommen werden kann. Bei einer gewünschten Änderung der Anzeige ist der komplette Mastercomputer auszutauschen.

### Vorteile der Erfindung

Die erfindungsgemäße Schaltungsanordnung mit den im Anspruch 1 genannten Merkmalen bietet demgegenüber den Vorteil, daß in einfacher Weise ein miteinander vernetztes modulares System der einzelnen Funktionsmodule schaffbar ist, die alle gemeinsam auf die für sie relevanten Informationen über den Betriebszustand des Kraftfahrzeuges zurückgreifen können. Dadurch, daß eine Zentraleinheit vorgesehen ist, die wenigstens eine Aufbereitungsschaltung für alle von den Funktionsmodulen gemeinsam nutzbaren Spannungs- und/oder Steuersignale enthält und die Zentraleinheit über ein Bus-System mit den Funktionsmodulen verbindbar ist, ist es vorteilhaft möglich, zwischen den einzelnen Funktionsmodulen und der Zentraleinheit einen Informationsaustausch durchzuführen, der ein aufeinander abgestimmtes Reagieren auf bestimmte Betriebszustände, beziehungsweise auf sich ändernde Betriebszustände des Kraftfahrzeuges erlaubt.

Sehr vorteilhaft wird es insbesondere möglich, die wenigstens eine in der Zentraleinheit vorhandene Aufbereitungsschaltung so auszulegen, daß diese über das Bus-System permanent wählbare, aus Sensoren bestehende Funktionsmodule abfragen kann, um so die Informationen über den Betriebszustand des Kraftfahrzeuges abrufbereit aufzubereiten. Hier können beispielsweise Informationen über Betriebstemperaturen, Geschwindigkeit, Einstellung des Motormanagements, Luftgüteinformationen usw. bereitgehalten werden. Durch die Verbindung der einzelnen Funktionsmodule über das Bus-System, kann jedes Funktionsmodul über den Durchlauf eines an sich bekannten Bus-Protokolls die für ihn relevanten Informationen abfragen. Darüber hinaus ist das Bus-System so ausgelegt, daß die verschiedenen Funktionsmodule untereinander, soweit es für deren Funktion notwendig oder sinnvoll ist, über die Zentraleinheit Informationen direkt austauschen können. Insgesamt wird es also möglich, mit diesem modularen System die gesamte sogenannte Karosserieelektronik eines Kraftfahrzeuges miteinander zu kombinieren um mit wenigen Mitteln ein aufeinander abgestimmtes Reagieren zu ermöglichen. Insbesondere wird es möglich die Funktionsmodule vor Ort mit der notwendigen, ausschließlich auf das bestimmte Funktionsmodul abgestimmte Elektronik zu versehen, während zentrale Aufgaben durch die Zentraleinheit wahrgenommen werden. Die Funktionsmodule können jederzeit über das Bus-System auf die interssierenden Informationen anderer Funktionsmodule zurückgreifen beziehungsweise Informationen für andere Funktionsmodule liefern.

Weiterhin ist bevorzugt, wenn die Zentraleinheit gleichzeitig eine Aufbereitung für die Versorgungsspannung der einzelnen Funktionsmodule enthält. Somit ist es sehr vorteilhaft möglich, eine zentrale Aufbereitung der Versorgungsspannung, beispielsweise eine Spannungsstabilisierung, eine Spannungsfilterung usw. durchzuführen. Jedes der einzelnen Funktionsmodule kann von dieser Aufgabe befreit und damit einfacher aufgebaut werden.

Weitere vorteilhafte Ausgestaltungen ergeben sich aus den übrigen in Unteransprüchen genannten Merkmalen.

### Zeichnung

Die Erfindung wird nachfolgend in Ausführungsbeispielen anhand der zugehörigen Zeichnungen näher erläutert. Es zeigen:
- Figur 1: ein Blockschaltbild einer erfindungsgemäßen Schaltungsanordnung;
- Figur 2: eine schematische Darstellung eines möglichen Aufbaus der Zentraleinheit und
- Figur 3: eine schematische Ansicht eines möglichen Aufbaus eines Fahrerinformationsmoduls.

### Beschreibung der Ausführungsbeispiele

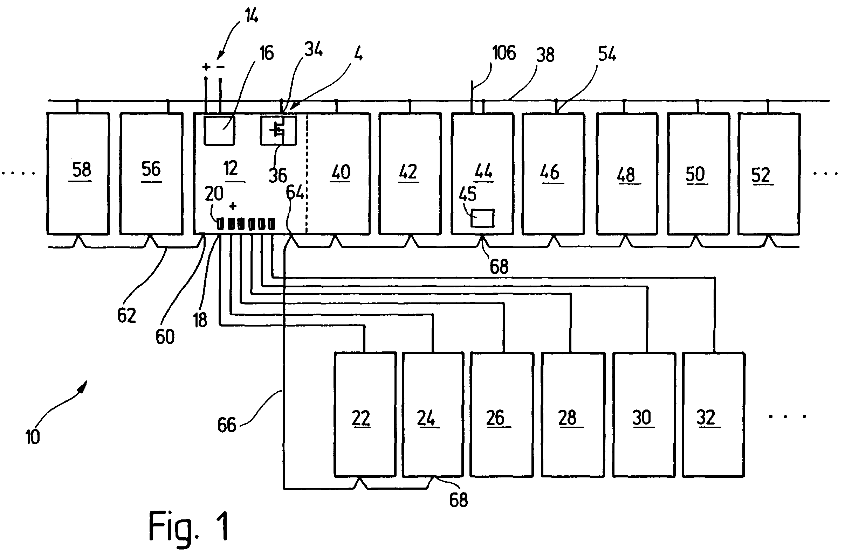

In Figur 1 ist eine allgemein mit 10 bezeichnete Schaltungsanordnung in einem Blockschaltbild gezeigt. Kernpunkt der Schaltungsanordnung 10 ist eine Zentraleinheit 12, die mit einer Spannungsquelle 14, beispielsweise der Kraftfahrzeugbatterie beziehungsweise einem Generator eines Kraftfahrzeuges verbindbar ist. Die Zentraleinheit 12 besitzt eine hier lediglich schematisch angedeutete Schaltungsanordnung 16, deren Funktion noch erläutert wird. Die Zentraleinheit 12 besitzt weiterhin erste Ausgänge 18, wobei im gezeigten Beispiel insgesamt sechs der Ausgänge 18 vorgesehen sind. An den Ausgängen 18 ist das Plus-Potential der Spannungsquelle 14 durchgeschaltet. Jeden der Ausgänge 18 ist eine Sicherung 20 zugeordnet. Die Sicherungen 20 sind beispielsweise als Schmelzsicherungen ausgeführt, die entsprechend dem an dem jeweiligen Ausgang 18 angeschlossenen Verbraucher dimensioniert sind. Jeder der Ausgänge 18 ist mit einem Funktionsmodul verbunden. Im gezeigten Beispiel ist ein erstes Funktionsmodul 22 beispielsweise ein Gebläsemotor für eine Kraftfahrzeugheizung. Ein zweites Funktionsmodul 24 ist ein EC-Motor für einen Kompressor einer Klimaanlage des nicht dargestellten Kraftfahrzeuges. Ein drittes Funktionsmodul 26 kann beispielsweise ein elektrischer Wischermotor für Scheibenwischer der Frontscheibe sein, während ein Funktionsmodul 28 beispielsweise ein elektrischer Wischermotor für Scheibenwischer der Heckscheibe sein kann. Ein nächstes Funktionsmodul 30 ist beispielsweise ein Gebläsemotor für eine Motorkühlung und ein Funktionsmodul 32 ein Motor für elektrische Fensterheber des Kraftfahrzeuges. Die Reihe der an den Ausgängen 18 anschließbaren Funktionsmodule ließe sich noch fortsetzen, indem jeder Ausstattungsgrad des Kraftfahrzeuges beispielsweise Motoren für eine Zentralverriegelung, Motoren für eine Sitzhöhenverstellung, Motoren zur Betätigung eines Dachfensters usw. vorgesehen sein kann. Die Anzahl der Funktionsmodule richtet sich ausschließlich nach dem Ausstattungsgrad des Kraftfahrzeuges.

Die Zentraleinheit 12 besitzt ferner einen weiteren Ausgang 34 der mit einer Spannungsaufbereitungs-Schaltung 36 der Zentraleinheit 12 verbunden ist. Über die Spannungsaufbereitungs-Schaltung 36 wird gewährleistet, daß an dem Ausgang 34 eine Spannung U anliegt, die für die an den Ausgang 34 anschließbare elektronische Bauelemente bestimmte Bedingungen erfüllt. Hierbei ist insbesondere eine Spannungsbegrenzung auf Werte der Spannung U ≤ 16 Volt, eine Impulsfilterung der Spannung U usw. realisiert. Somit ergibt sich für die noch zu erläuternden an den Ausgang 34 angeschlossenen elektronischen Bauelemente beispielsweise ein Verpolschutz oder ein Überspannungsschutz. Von dem Ausgang 34 zweigt ein Leitungsnetz 38 ab, an dem weitere Funktionsmodule, die mit der an dem Ausgang 34 anliegenden Spannung U betreibbar sind, angeschlossen sind. Diese weiteren Funktionsmodule können beispielsweise ein Fahrerinformationsmodul 40, ein Bedienmodul 42, ein Airbagmodul 44, ein Drehzahlmessermodul 46, ein Luftgütesensormodul 48, ein Regensensormodul 50, ein Radiomodul 52 usw. sein. An das Leitungsnetz 38 sind weitere Funktionsmodule wie beispielsweise ein Wegfahrsperrenmodul, ein Zündschloßmodul usw. anschließbar. Die Funktionsmodule besitzen jeweils einen Eingang 54, über den diese mit dem Leitungsnetz 38 verbindbar sind.

Als weitere Funktionsmodule, hier links neben der Zentraleinheit 12 dargestellt, können ein Motorsteuer-Modul 56, ein ABS-Modul 58 sowie weitere nicht dargestellte Module, beispielsweise ein ASR-Modul (Antischlupfregelung), AKB-Modul (Kupplungsautomat) usw.vorgesehen sein.

Anhand der in Figur 1 gezeigten Übersicht wird gleichzeitig die Aufteilung der Funktionsmodule in drei Arten von Funktionsmodule deutlich. Dies sind einerseits die sogenannten, an den Ausgängen 18 angeschlossenen Hochstromverbraucher, zweitens die als Bedien- und/oder Sensorelemente ausgebildeten Module (rechts neben der Zentraleinheit 12 dargestellt) und die Motor- und Fahrwerksmodule (links neben der Zentraleinheit 12). Über die zeichnerische Darstellung soll jedoch keine Aussage über die räumliche Anordnung der einzelnen Funktionsmodule in dem Kraftfahrzeug getroffen werden.

Die Zentraleinheit 12 besitzt ferner einen Anschluß 60, der über ein Bus-Leitung 62 mit den Modulen 56 und 80 verbunden ist. Ein weiterer Anschluß 64 ist über eine weitere Bus-Leitung 66 mit den Funktionsmodulen 40, 42, 44, 46, 48, 50, 52, 22 und 24 verbunden. Die Anschlüsse 60 und 64 der Zentraleinheit 12 sind mit der Schaltungsanordnung 16 verbunden. Die Bus-Leitungen 62 und 66 bilden somit einen Verbund, wobei die einzelnen Funktionsmodule über die Zentraleinheit 12 miteinander gekoppelt sind. Die Bus-Leitungen 62 und 66 besitzen den für die Übertragung und Erkennung eines Bus-Protokolls üblichen Aufbau. Jedes der Funktionsmodule besitz einen Eingang 68 und eine dem Eingang 68 zugeordnete Schaltung, über die die Bus-Leitungen 62 beziehungsweise 66 ansprechbar, das heißt benutzbar sind. Diese Schaltung kann beispielsweise eine Zeitschaltung enthalten, so daß in festlegbaren Zeitintervallen jeweils ein Bus-Protokoll abrufbar ist.

Die in Figur 1 dargestellte Schaltungsanordnung 10 stellt ein Blockschaltbild der gesamten sogenannten Karosserieelektronik eines Kraftfahrzeuges dar und übt folgende Funktion aus:

Beim bestimmungsgemäßen Gebrauch des Kraftfahrzeuges liegt die über die Spannungsquelle 14 bereitgestellte Betriebsspannung an der Zentraleinheit 12 an. Die Zentraleinheit 12 verteilt die Betriebsspannung direkt über die Ausgänge 18 an die hier mit 22 bis 32 bezeichneten Funktionsmodule. Über die Spannungsaufbereitungs-Schaltung 36 wird die Betriebsspannung gleichzeitig für die übrigen Funktionsmodule bereitgestellt beziehungsweise aufgearbeitet.

Mittels des Fahrerinformationsmoduls 40 werden dem Kraftfahrzeugführer die notwendigen Daten zum Führen des Kraftfahrzeuges übermittelt. Das Fahrerinformationsmodul 40 kann je nach Ausstattungsvariante des mit der Schaltungsordnung 10 versehenen Kraftfahrzeuges unterschiedliche Anzeigeinstrumente besitzen. So ist es denkbar, daß nach einer Basisvariante das Fahrerinformationsmodul 40 beispielsweise einen Tachometer, mittels Displays sichtbare Warnpiktogramme für bestimmte kritische Betriebszustände des Kraftfahrzeuges, Anzeigelampen für die Signalisierung der Betriebsfunktion der Beleuchtungsanlage, beispielsweise der Blinkgeber, des Fernlichtes und der Warnblinkanlage aufweist. Weiterhin kann ein Multifunktionsdisplay vorgesehen sein, auf dem beispielsweise die gefahrenen Kilometer, Tankanzeige usw. darstellbar sind. Das Fahrerinformationsmodul 40 kann vorteilhafterweise, wie in der Figur 1 mittels der gestrichelten Linie angedeutet, unmittelbar mit der Zentraleinheit 12 gekoppelt sein. Über entsprechende mechanische Verbindungen, zwischen dem Fahrerinformationsmodul 40 und der Zentraleinheit 12, die vorteilhafterweise lösbar ausgebildet sind, kann die Verbindung sehr vorteilhaft hergestellt werden. Die elektrische Verbindung zwischen der Zentraleinheit 12 und dem Fahrerinformationsmodul 40 kann beispielsweise über eine vierpolige Standard-Schnittstelle erfolgen, die bei der mechanischen Verbindung der Module kontaktiert wird. Hierdurch ergibt sich der Vorteil, daß zwischen der Zentraleinheit 12 und dem Fahrerinformationsmodul 40 keine weitere Verkabelung notwendig ist. Die Stromversorgung des Fahrerinformationsmoduls 40 erfolgt über das Leitungsnetz 38, wobei eine Vorstabilisierung der Spannung U bereits durch die Spannungsaufbereitungs-Schaltung 36 erfolgt, so daß hierfür in dem Fahrerinformationsmodul 40 keine weiteren Schaltungen vorhanden zu sein brauchen. Diese erläuterte Variante der Ausbildung des Fahrerinformationsmoduls 40 als Basismodul erlaubt es, bei einer Änderung der Ausstattung des Kraftfahrzeuges das Fahrerinformationsmodul 40 von der Zentraleinheit 12 zu entkoppeln, beispielsweise auszurasten und durch ein anderes Fahrerinformationsmodul zu ersetzen. Durch die vorgesehene Standard-Schnittstelle zwischen der Zentraleinheit 12 und dem jeweils anzukoppelnden Fahrerinformationsmodul 40 ist ein beliebiger Austausch in einfacher Weise möglich, ohne daß es einer zusätzlichen Verkabelung bedarf. Dieses auszutauschende Fahrerinformationsmodul 40 kann beispielsweise zusätzlich einen Drehzahlmesser, ein Radio, eine Uhr, ein Navigationsdisplay, Temperaturanzeigen usw. enthalten. Durch Austausch des Fahrerinformationsmoduls 40 kann somit das Kraftfahrzeug ohne großen Aufwand mit zusätzlichen Anzeige- und/oder Bedienelementen versehen werden.

Nach einer weiteren, nicht dargestellten Ausführungsvariante, kann das als Basismodul ausgebildete Fahrerinformationsmodul 40 an einer nicht der Zentraleinheit 12 zugewandten Seite weitere Verbindungsstellen, das heißt Standard-Schnittstellen und mechansiche Rastmöglichkeiten für Erweiterungsmodule besitzen. Somit kann die aus der Zentraleinheit 12 und dem Fahrerinformationsmodul 40 bestehende Grundeinheit durch beliebige Module erweitert werden, ohne daß es einer umfänglichen zusätzlichen Verkabelung bedarf. Dies ist insbesondere vorteilhaft, wenn die Zentraleinheit 12 im Armaturenbrett des Kraftfahrzeuges angeordnet ist, wobei entsprechende, gegebenenfalls bei Nichtbenutzung abdeckbare, Aussparungen im Armaturenbrett für die Andockung der weiteren Module vorhanden sind. Der Flexibilität der Ausstattung sind hierbei keine Grenzen gesetzt.

Die Zentraleinheit 12 besitzt ferner hier nicht dargestellte Bedienelemente, mit denen einzelne der Funktionsmodule betätigbar sind. Insbesondere kann mittels der beispielsweise bei einer Grundausstattung vorhandenen Bedienelemente die für die Fahrsicherheit des Kraftfahrzeuges unbedingt notwendige Betätigung der entsprechenden Funktionsmodule erfolgen. Dies können beispielsweise die Lichtanlage, die Blinkanlage, die Scheibenwischanlage für Front- und Heckscheibe usw. sein. Weitere Bedienelemente sind beispielsweise über das Bedienmodul 42 mit der Zentraleinheit 12 kombinierbar. Das Bedienmodul 42 kann beispielsweise, ähnlich wie bereits zu den Fahrerinformationsmodulen 40 erläutert, mit der Zentraleinheit 12 und/oder dem Fahrerinformationsmodul 40 durch einfache, gleichzeitig eine elektrische und mechanische Fixierung bewirkende Andockung kombiniert werden. Das Bedienmodul kann nunmehr weitere Bedienelemente, für Ausstattungsvarianten des Kraftfahrzeuges aufweisen, die nicht notwendigerweise zu einer Grundausstattung gehören. Die kann beispielsweise eine mehrstufige Heizungseinstellung, eine Betätigung der Klimaanlage, elektrisches Dachfenster usw. sein. Hierbei ist wiederum jede Kombination denkbar, die an die jeweilige Ausstattungsvariante des Kraftfahrzeuges anpaßbar ist. Die mit dem Fahrerinformationsmodul 40 und/oder dem Bedienmodul 42 kombinierte Zentraleinheit 12 ist hierbei so angeordnet, daß diese von dem Kraftfahrzeugführer jederzeit gut einsehbar und die hieran angeordneten beziehungsweise angedockten Bedienelemente gefahrlos bedienbar sind. Mittels der Bedienelemente werden die jeweilig zugeordneten Ausgänge 18 der Zentraleinheit 12 mit den die entsprechend ausgewählten Funktionen realisierenden Funktionsmodulen 22 bis 32 verbunden, so daß diese über die Zentraleinheit 12 mit der Spannungsquelle 14 verbunden werden.

Mittels der über der Schaltungsanordnung 16 miteinander verbundenen Bus-Leitungen 62 beziehungsweise 66 können die einzelnen Funktionsmodule miteinander kommunizieren. Die Schaltungsanordnung 16 übernimmt hierbei eine zentrale Steuerfunktion, die die Abrufbarkeit beziehungsweise die Ansprechbarkeit der einzelnen Funktionsmodule steuert. Hierzu kann die Schaltungsanordnung 16 beispielsweise Prioritätssignale vergeben, die eine Zugangsberechtigung der einzelnen Funktionsmodule zu dem Bus regelt. Entsprechend der von der Schaltungsanordnung 16 ausgehenden Steuersignale, können nunmehr bestimmte Funktionsmodule für sie bestimmte Signale abrufen. Gleichzeitig ist es möglich, daß die Funktionsmodule untereinander Informationen austauschen beziehungsweise gleichzeitig über die Schaltungsanordnung bestimmte Steuersignale erhalten, die ein aufeinander abgestimmtes Reagieren ermöglichen.

So ist nach einem lediglich zur Erläuterung herausgegriffenem Beispiel denkbar, daß das Funktionsmodul 50, das als Regensensor ausgebildet ist, einen Niederschlag detektiert, wobei eine entsprechende Information über die Bus-Leitung 66 an die Schaltungsanordnung 16 gegeben wird. Diese Information wird nunmehr so verarbeitet, daß über die Schaltungsanordnung 16 ein Kontaktieren des Funktionsmoduls 26 und/oder 28 mit der Spannungsquelle 14 veranlaßt wird, so daß die Wischermotoren in Funktion treten.

Ein weiteres Beispiel ist, wenn das als Luftgütesensor ausgebildete Funktionsmodul 48 eine Veränderung des Schadstoffgehaltes in der Umgebungsluft des Kraftfahrzeuges detektiert, und diese Information über die Bus-Leitung 66 an die Schaltungsanordnung 16 gegeben wird, worauf diese ein Signal für ein Funktionsmodul bereitstellt, das zum Beispiel eine Frischluft-/Umluftklappe in der Klimatisierung schließt.

Ist das als Luftgütesensor ausgebildete Funktionsmodul 48 beispielsweise zur Messung der Luftgüte in dem Fahrgastinnenraum ausgelegt, kann über die Bestimmung der Luftgüte Einfluß auf die Umschaltung der Heizung beziehungsweise Klimaanlage von Frischluftzufuhr auf Umluft Einfluß genommen werden. Diese lediglich beispielhaft herausgegriffenen Möglichkeiten verdeutlichen die Verknüpfung der einzelnen Funktionsmodule über die Bus-Leitungen 62 beziehungsweise 66 untereinander. Diese Beispiele ließen sich für verschiedene Kombinationen einzelner Funktionsmodule, die aufeinander abgestimmt reagieren, fortsetzen.

Insgesamt ist somit für die Karosserieelektronik ein modulares System geschaffen, das durch die Ausbildung verschiedener Funktionsmodule, die Grundbeziehungsweise Basisfunktionen enthalten und über Erveiterungsmodule entsprechend den jeweiligen Anforderungen an das konkrete Kraftfahrzeug anpaßbar ist. Durch die miteinander kombinierbaren Funktionmodule, und deren Vernetzung über die Bus-Leitungen 62 beziehungsweise 66 sowie die gemeinsame Spannungsversorgung über die Zentraleinheit 12 ist ein Um- beziehungsweise Ausbau des Modulsystems in einfacher Weise möglich. Insbesondere können nachträglich sich ergebende Ausstattungswünsche für das Kraftfahrzeug in einfacher Weise berücksichtigt werden, da eine neue, das heißt, zusätzliche Verkabelung nicht notwendig ist. Über den Anschluß an den einmal vorgesehenen Standard-Kabelbaum, der die Bus-Leitung 62 beziehungsweise 66 sowie das Leitungsnetz 38 enthält, sind alle weiteren zusätzlichen Ausstattungsvarianten berücksichtigbar.

Durch die Konzentrierung der wesentlichen Steuerbeziehungsweise Versorgungsfunktionen in der Zentraleinheit 12 ergeben sich darüber hinaus fertigungstechnische Vorteile. Eine in der Zentraleinheit 12 eingesetzte Modulhardware, in der Schaltungsanordnung 16, kann somit optimal über die Bus-Leitungen 62 beziehungsweise 66 von allen Funktionsmodulen gemeinsam genutzt werden. Durch die zusätzliche Integration von Bedienelementen, der Spannungsaufbereitungsschaltung 36 und den Sicherungen 20 in der Zentraleinheit 12 ist insgesamt eine kompakte Einheit geschaffen, die in großen Stückzahlen kostengünstig herstellbar ist, und jeweils nur noch einen Montageschritt an dem jeweiligen Kraftfahrzeug erfordert.

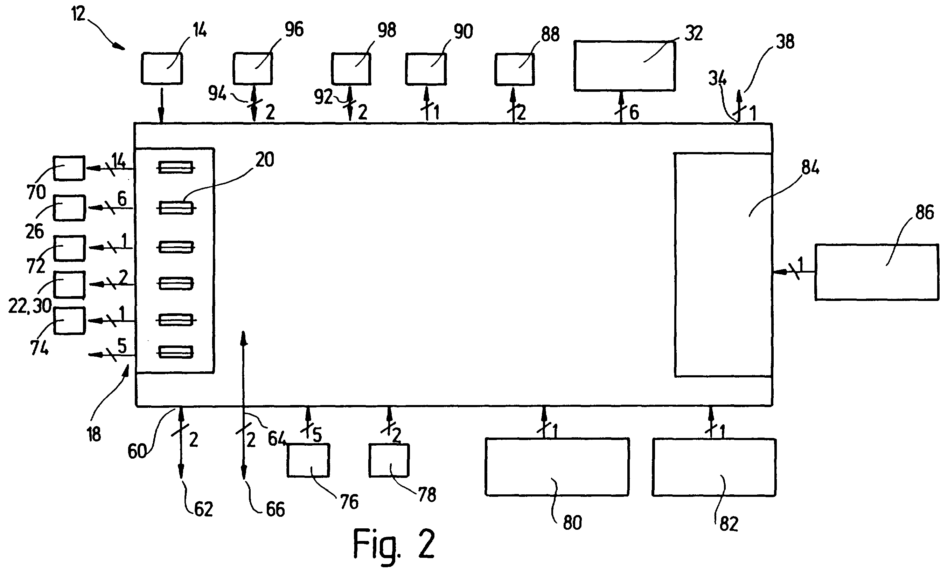

In der Figur 2 ist schematisch eine Zentraleinheit 12 in einer möglichen Ausstattungsvariante dargestellt. Gleiche Teile wie in Figur 1 sind mit gleichen Bezugszeichen versehen und nicht nochmals erläutert. Die Zentraleinheit 12 besitzt hier die Sicherungen 20 die jeweils zwischen der Spannungsquelle 14 und den Ausgängen 18 angeordnet sind. Auf die Darstellung selbstverständlich notwendiger Verteiler wurde aus Gründen der Übersichtlichkeit verzichtet. Die Ausgänge 18 sind nunmehr jeweils mit Funktionsmodulen verbunden. Die an den Ausgängen vermerkten Zahlen verdeutlichen die Anzahl der Kabel, die zu den einzelnen Funktionsmodulen führen. Ein Beleuchtungsmodul 70 ist beispielsweise mittels vierzehn einzelner Kabel mit der Zentraleinheit 12 verbunden. Hierbei ist selbstverständlich, daß sich das Funktionsmodul 70 aus den einzelnen an den verschiedenen Positionen des Kraftfahrzeuges angeordneten Leuchten zusammensetzt. Weiterhin ist das bereits in Figur 1 erwähnte Modul 26 über sechs Kabel an die Zentraleinheit 12 angeschlossen. Ein Signalhornmodul 72 ist über ein Kabel, das Gebläsemodul 22 beziehungsweise 30 sowie ein Heckscheibenheizungsmodul 74 über die jeweilige Anzahl von Kabeln an die Zentraleinheit 12 angeschlossen. Weiterhin ist hier eine Reserveverkabelung mit fünf einzelnen Kabeln zum Nachrüsten mit weiteren Modulen vorgesehen. Die Bus-Leitungen 62 und 66 sind hier lediglich angedeutet. Als Bussystem kann ein sogenannter CAN-Bus Verwendung finden, wobei die Busleitung 62 einen CAN-Gateway bildet. An die Zentraleinheit 12 ist weiterhin ein als Türkontaktschalter ausgebildetes Funktionsmodul 76 und ein als Tankgeber ausgebildetes Funktionsmodul 78 angeschlossen. Weiterhin kann ein Funktionsmodul 80 angeschlossen sein, das im Lenkrad des Kraftfahrzeuges angeordnete Bedienelemente beinhaltet. Ein weiteres Funktionsmodul 82 kann ein Schaltelement für die Auslösung der Zentralverriegelung sein. Die Zentraleinheit 12 kann hierzu mit einem separaten Zentralverriegelungsmodul 84 versehen sein, das mit einer Kompressorkupplung 86 verbunden ist. Darüber hinaus ist das Funktionsmodul 32, das Zentralverriegelungsmotoren enthält, an die Zentraleinheit 12 angeschaltet. Weitere Funktionsmodule 88 und 90 werden von einem Umschalter zwischen Frischluft und Umluft für die Heizung beziehungsweise einem Wasserventil gebildet. Über weitere bidirexionale Leitungsverbindungen 92 beziehungsweise 94 kann als Funktionsmodul 96 ein Zündschloß-Transponder und als Funktionsmodul 98 ein Kontaktbahnwischer angeschlossen sein.

Insgesamt wird also deutlich, daß mittels einer einzigen kompakten Zentraleinheit 12 eine Vielzahl unterschiedlichster Funktionsmodule miteinander verbindbar, insbesondere verschaltbar sind.

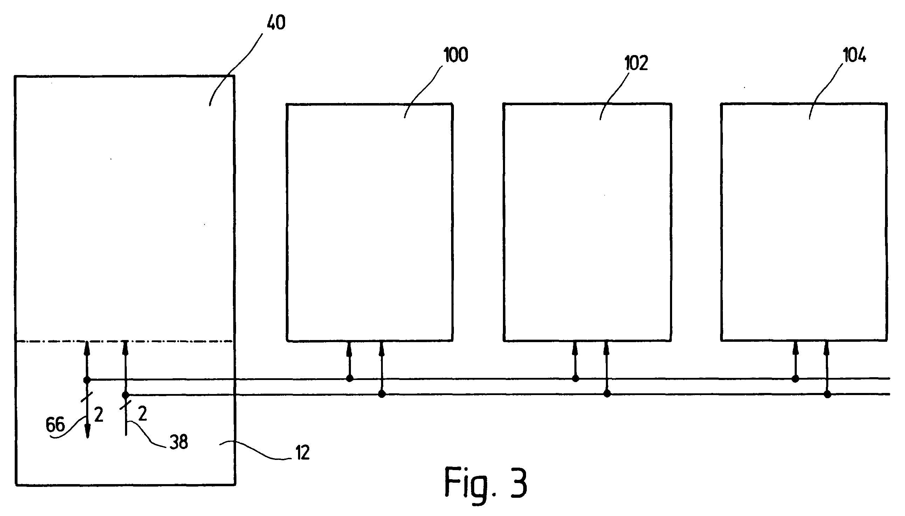

Figur 3 zeigt nochmals schematisch die bereits zu Figur 1 erläuterte Anordnung der Zentraleinheit 12 mit dem kombinierten Fahrerinformationsmodul 40. Über die gestrichtelte Linie ist wiederum angedeutet, daß die Zentraleinheit 12 mit dem Informationsmodul 40 über eine einfache Verbindung mechanisch arretiert und elektrisch angekoppelt werden kann. Das Fahrerinformationsmodul 40 kann neben der Grundausstattung, die beispielsweise aus einem Tachometer, einem Multifunktionsdisplay und Warnpiktogrammen besteht, mit Erweiterungsmodulen versehen werden. Diese Erweiterungsmodule werden entweder zusätzlich zu dem bereits vorhandenen Fahrerinformationsmodule 40 vorgesehen, indem diese parallel zu dem die Betriebsspannung bereitsstellenden Leitungsnetz 38 und der Bus-Leitung 66 geschaltet werden. In Figur 3 ist beispielhaft ein Funktionsmodul 100 dargestellt, das einen Bordcomputer umfassen kann. Ein Funktionsmodul 102 kann beispielsweise ein Navigationsmodul und ein Funktionsmodul 104 beispielsweise ein Drehzahlmesser sein. Die Anzahl der kombinierbaren Module läßt sich entsprechend den Erfordernissen -wie bereits erwähnt- erweitern.

Mittels des gesamten aus der Zentraleinheit 12, den einzelnen Funktionsmodulen sowie den die Funktionsmodule untereinander und mit der Zentraleinheit verbindenden Leitungsnetz 38 sowie Bus-Leitungen 62 beziehungsweise 66 bestehenden Systemen, läßt sich in einfacher Weise eine komplette Karosserieelektronik für ein Kraftfahrzeug realisieren. Durch die Ausbildung der Zentraleinheit 12 kann die komplette Steuerung zentralisiert werden, wobei hier für die gesamte Steuerung nur ein Hardware-Baustein, der Bestandteil der Schaltungsanordnung 16 ist, vorhanden zu sein braucht. Vorallem ergibt sich hierdurch eine optimale Nutzung der Schaltungsanordnung 16 für die gesamte Karosserieelektronik. Über die Ansteuerung der Funktionsmodule mittels der Bus-Leitungen 62 beziehungsweise 66 ist eine Mehrfachnutzung einmal generierter Signale möglich. Unabhängig davon, wo diese Signale generiert wurden, ob beispielsweise in der Schaltungsanordnung 16, oder in einzelnen der Funktionsmodule, stehen diese Signale allen Funktionsmodulen gleichberechtigt zur Verfügung.

Weiterhin läßt sich eine Einsparung der Anzahl der einzelnen Kabel für die gesamte Karosserieelektronik durch die Verwendung eines Standard-Kabelbaumes erreichen, an den die einzelnen Funktionsmodule je nach Bedarf angeschließbar sind. Insbesondere die einmal vorhandene Bus-Leitung 62 beziehungsweise 66 gestattet ein weiteres Anschließen von Funktionsmodulen, die durch jeweils eine in den Funktionsmodulen vorhandene Bus-Ansteuerelektronik in den Gesamtverbund integrierbar sind. Die Mehrfachnutzung des Kabelbaums für mehrere Funktionsmodule bringt neben dem verringerten Montageaufwand eine Material- und damit Gewichtseinsparung.

Ein weiterer Vorteil besteht in der zentralen Spannungsaufbereitungs-Schaltung 36, die einen Überspannungsschutz und eine Impulsfilterung der Spannung für sämtliche Funktionsmodule übernimmt. Hierdurch brauchen in den einzelnen Funktionsmodulen entsprechende Bauelemente, die einen Schutz der in den Funktionsmodulen vorhandenen elektronischen Schaltungen vor Spannungsschwankungen übernimmt, nicht mehr vorgesehen zu sein.

Weitere vorteilhafte Ausgestaltungen des erfindungsgemäßen Modulsystems der Karosserieelektronik beziehen sich darauf, daß das in Figur 1 mit 44 bezeichnete Airbag-Modul eine zentrale Funktion für die Auslösung von in dem Kraftfahrzeug vorgesehenen Airbags, beispielsweise Fahrer- und Beifahrerairbag und die Ansteuerung für weitere Sicherheitsfunktionen übernimmt. In dem Airbag-Modul 44 können einerseits die eine Auslösung der Sicherheitssysteme bewirkenden allgemein bekannten Beschleunigungssensoren angeordnet sein. Über die Detektierung eines entsprechenden Signals, kann diese Information auf die Bus-Leitung 66 und somit an die Schaltungsanordnung 16 gegeben werden. Durch Belegung dieser Informationssignale mit sehr hoher Priorität, können über die Bus-Ansteuerung des Airbag-Moduls 44 sämtliche anderen, gerade auf der Bus-Leitung 62 beziehungsweise 66 abgearbeiteten Bus-Protokolle unterbrochen werden, und die Auslösung der Sicherheitssysteme mit großer Priorität veranlaßt werden. Dies könnte beispielsweise in der Ansteuerung von Gurtstraffern, in einer Notstopp-Funktion einer Benzinpumpe und in einer Notöffnung der Zentralverriegelung bestehen. Hierdurch wird gewährleistet, daß mit großer Sicherheit auf kürzestem Wege, das heißt innerhalb kürzester zur Verfügung stehender Zeit, sämtliche Sicherheitsfunktionen des Kraftfahrzeuges auslösen. Durch die direkte Kopplung der einzelnen Funktionsmodule über die Bus-Leitungen 62 beziehungsweise 66 kann eine Auswahl, die beispielsweise vorher in entsprechende Speicherelemente der Schaltungsanordnung 16 oder des Airbag-Moduls 44 einprogrammiert wurden, die Priorität der Ansteuerung einzelner Funktionsmodule festgelegt sein. Weiterhin ist vorteilhaft vorgesehen, daß das Airbag-Modul 44 wenigstens ein Speicherelement 45 aufweist, das ständig die über die Bus-Leitungen 62 beziehungsweise 66 transferierten Bus-Protokolle ließt und abspeichert. Die Abspeicherung kann hierbei vorzugsweise in einem frei wählbaren Zeitintervall erfolgen, so daß beispielsweise die Betriebszustände des Kraftfahrzeuges, der Schaltungszustand der einzelnen Funktionsmodule usw. innerhalb einer letzten Zeitspanne die beispielsweise 30 Sek. betragen kann, abgespeichert werden. Weiterhin können fortlaufend allgemeine Angaben über das Kraftfahrzeug, beispielsweise dessen Alter, dessen Betriebslaufzeit, dessen Gesamtkilometerleistung usw. abgespeichert werden. Im Falle eines Unfalls mit dem Kraftfahrzeug, bleiben die permanent gespeicherten und die in Zeitintervallen abgespeicherten Daten in dem Speichermittel des Airbag-Moduls 44 erhalten, so daß dieses zur Auswertung der Unfallursache -nach Art eines Flugschreibersherangezogen werden kann. Weiterhin kann das Airbag-Modul 44 mit verschiedenen weiteren von Sensoren gebildeten Funktionsmodulen, über die Bus-Leitung 66 verbunden sein, so daß beispielsweise eine Sitzbelegungserkennung der einzelnen Sitzplätze des Kraftfahrzeuges, eine sogenannte Kindersitzerkennung, und eine Sicherheitsgurtschloß-Überwachung integrierbar ist. In Auswertung aller dieser vorliegenden Informationen kann das Airbag-Modul 44 gezielt die Auslösung der Sicherheitssysteme für den Fall eines Unfalls steuern.

Sehr vorteilhaft kann der Airbag-Sensor 44 mit einer in Figur 1 mit 106 bezeichneten Schnittstelle versehen sein, die den Anschluß eines externen Diagnosegerätes für das gesamte Kraftfahrzeug gestattet. Auf diese Weise kann das einmal in dem Kraftfahrzeug vorhandene Bus-Leitungssystem 62, 66 für eine umfaßende Diagnose der einzelnen Funktionsmodule, das heißt, insbesondere für einen Test für deren Funktionsfähigkeit, beziehungsweise für eine externe Einstellung der in den einzelnen Funktionsmodulen enthaltenen Steuerelektroniken genutzt werden.

Weiterhin läßt sich durch die Vernetzung der einzelnen Funktionmodule mit der Zentraleinheit 12 über den von den Bus-Leitungen 62 beziehungsweise 66 sowie dem Leitungsnetz 38 gebildeten Kabelbaum in einfacher Weise eine Fahrzeugidentifikation codieren. Hierbei ist es sehr vorteilhaft möglich, daß sämtliche Funktionsmodule bei ihrer Herstellung einen neutralen Code erhalten, der beispielsweise in der Bus-Ansteuerelektronik der einzelnen Funktionsmodule eingebbar ist. Hiermit wird die Funktionsfähigkeit der einzelnen Module unabhängig von ihrer Verschaltung in dem Gesamtverbund vorerst sichergestellt. Bei der Grundausstattung eines bestimmten Personenkraftwagens, werden die für diesen speziellen Personenkraftwagen zusammengestellten Funktionsmodule und die Zentraleinheit 12 mit einem fahrzeugspezifischen Identifikationscode angelernt, so daß diese untereinander über das Bus-System Bus-Protokolle austauschen und miteinander -in der bereits erläuterten Art und Weise- kommunizieren können. Somit ist jedes der Funktionsmodule auf das spezielle Fahrzeug in einfacher Weise abstimmbar. Durch die Codierung der einzelnen Funktionsmodule auf ein bestimmtes Fahrzeug, wird eine Diebstahlsicherung der einzelnen Funktionsmodule gewährleistet, da deren Funktion in einem anderen Fahrzeug aufgrund der auf das spezielle Fahrzeug zugeschnittene Identifikation nicht mehr möglich ist. Mit der Einstellung des Fahrzeugidentifikationscodes für ein bestimmtes Fahrzeug in der Zentraleinheit 12 beziehungsweise in einzelnen Funktionsmodulen, wird gleichzeitig sichergestellt, daß bei einer späteren Nachrüstung des gesamten Verbandes mit einem zusätzlichen Funktionsmodul, dieses den auf das spezielle Fahrzeug zugeschnittenen Fahrzeugidentifikationscode automatisch anlernen kann. Somit wird die Einbindung zusätzlicher Funktionsmodule in den Gesamtverband in einfacher Weise möglich. Eine Umcodierung des miteinander verschalteten Verbandes, wird nur noch über einen PIN-Code möglich, der bei Auslieferung des Fahrzeuges dem Fahrzeughalter ausgehändigt wird. Dieser PIN-Code erlaubt eine Umcodierung der Verschaltung für den Fall, daß einzelne Funktionsmodule ausgetauscht oder für eine zeitweilige Reparatur aus dem Verband entnommen werden sollen. Insgesamt läßt sich über die Codierung der Fahrzeugidentifikation gleichzeitig eine Diebstahlsicherung des gesamten Fahrzeuges integrieren, indem beispielsweise die Kommunikation mittels Bus-Protokollen der einzelnen Funktionsmodule und der Zentraleinheit 12 untereinander über die Bus-Leitungen 62 beziehungsweise 66 blockierbar ist. Durch die Blockierung sämtlicher oder gegebenfalls nur ausgewählter Funktionsmodule wird ein Inbetriebsetzen des Kraftfahrzeuges sicher vermieden. Die gewollte Inbetriebsetzung kann durch einen entsprechenden Steuerbefehl ausgelöst werden, der beispielsweise an das Einführen eines speziellen Zündschlüssels in das Funktionsmodul 96 (Figur 2) gebunden ist, so daß über die bidirektionale Verbindung 94 ein Datenaustausch mit der Zentraleinheit 12 stattfindet, die eine Zugangsberechtigung des den Zündschlüssel in das Funktionsmodul 96 einführenden Fahrzeugführer detektiert. Somit wären in einfacher Weise Manipulationen an der gesamten Fahrzeugelektronik verhindert, zumindestens erheblich erschwert, und damit insgesamt der Diebstahlschutz des Fahrzeuges verbessert.

Nach allem ist festzuhalten, daß durch die Vernetzungsmöglichkeiten der Zentraleinheit 12 mit den verschiedenartigsten Funktionsmodulen über einen einheitlichen Standard-Kabelbaum, wobei bei Erweiterungen mit zusätzlichen Funktionsmodulen eine Nachrüstung des Standard-Kabelbaumes nicht erforderlich ist, eine sehr komplexe und vielseitig einsetzbare auf verschiedenste Betriebsbedingungen selbsttätig reagierende Karosserieelektronik erzielbar ist. Durch die Vernetzung der Funktionsmodule und der Zentraleinheit 12 untereinander über das Bus-System 62 beziehungsweise 66 lassen sich zusätzliche Funktionsmerkmale erzielen, ohne daß hierfür eigenständige Funktionsmodule vorhanden sein müssen. Diese zusätzlichen Funktionen ergeben sich aus der Kombination von wenigstens zwei der vorhandenen Funktionmodule beziehungsweise der Zentraleinheit 12 und deren Kommunikation über das Bus-System. Hier seien als zusätzliche Funktionen beispielsweise eine Time-Out-Innenbeleuchtung, eine Motorschutzfunktion für Front- und Heckscheibenwischer, eine automatische Wisch-/Waschsteuerung, eine Alarmanlage, ein Diebstahlschutz, ein Öffnen der Zentralverriegelung bei Airbag-Auslösung und ein Unfalldatenschreiber genannt. Die einzigste Einschränkung hinsichtlich der Verwendung des Standard-Kabelbaumes, der aus den einzelnen Leitungen besteht, die die Bus-Leitungen 62 beziehungsweise 66 und das Leitungsnetz 38 ergeben, besteht für den Fall, daß bei einem ausgelieferten Fahrzeug beispielsweise elektrische Fensterheber und eine Zentralverriegelung nachgerüstet werden sollen. Hierzu ist die zusätzliche Verlegung entsprechender Kabel in den entsprechenden Türen notwendig. Gegebenenfalls können diese zusätzlichen Kabel nach einer weiteren Ausführungsvariante bereits in den Standard-Kabelbaum eingebunden sein, und lediglich ohne Anschluß der entsprechenden Funktionsmodule bis zu den Einbauorten, die in den Türen liegen, ohne daß die hierfür notwendigen Funktionsmodule vorerst vorhanden sind, verlegt werden.

Die Erfindung beschränkt sich nicht auf die in der Beschreibung beispielhaft genannten Funktionsmodule. Selbstverständlich sind darüber hinaus jede andere Art von Funktionsmodulen, deren Einsatz in Fahrzeugen jeglicher Art denkbar ist, möglich. Entscheidend ist, daß das gesamte System der Vernetzung der Funktionsmodule mit der Zentraleinheit 12 über ein Bus-System erfolgt, so daß diese untereinander kommunizieren und gegebenenfalls automatisch abgestimmt aufeinander reagieren beziehungsweise auslösen können.

## Patentansprüche

1. Vorrichtung, mit in einem Kraftfahrzeug angeordneten Funktionsmodulen (22, 24, 26, 28, 30, 32, 40, 42, 44, 46, 48, 50, 52, 56, 58, 70, 72, 74, 76, 78, 80, 82, 84, 86, 88, 90, 96, 98), wobei eine Zentraleinheit (12) über ein Bus-System (62, 66) mit den Funktionsmodulen und die Funktionsmodule untereinander verbindbar sind, dadurch gekennzeichnet, daß die Zentraleinheit (12) mit einem Fahrerinformationsmodul (40) unmittelbar über mechanische Verbindungen gekoppelt ist.

2. Vorrichtung nach Anspruch 1, dadurch gekennzeichnet, daß die mechanischen Verbindungen losbar ausgebildet sind.

3. Vorrichtung nach einem der Vorhergehenden Ansprüche, dadurch gekennzeichnet, daß das Bus-System (62, 66) und ein Leitungsnetz (38) gemeinsam von einem Standard-Kabelbaum gebildet sind, an den über eine bestehende Reserveverkabelung zusätzliche Funktionsmodule anschließbar sind.

4. Vorrichtung nach einem der vorhergehenden Ansprüche, dadurch gekennzeichnet, daß über das Bus-System (62, 66) und/oder das Leitungsnetz (38) anliegende Spannungssignale von verschiedenen unterschiedlichen Funktionsmodulen gleichzeitig nutzbar sind.

5. Vorrichtung nach einem der vorhergehenden Ansprüche, dadurch gekennzeichnet, daß an das Bus-System (62, 68) eine wählbare Anzahl von Funktionsmodulen anschließbar ist.

6. Vorrichtung nach einem der vorhergehenden Ansprüche, dadurch gekennzeichnet, daß die Zentraleinheit (12) eine Spannungsaufbereitungs-Schaltung (36) für die Funktionsmodule enthält, die über das Leitungsnetz (38) mit der Zentraleinheit (12) verbunden sind.

7. Vorrichtung nach einem der vorhergehenden Ansprüche, dadurch gekennzeichnet, daß die Zentraleinheit (12) Sicherungen (20) für an die Zentraleinheit (12) anschließbare Funktionsmodule (Hochstromverbraucher) enthält.

8. Vorrichtung nach einem der vorhergehenden Ansprüche, dadurch gekennzeichnet, daß die Zentraleinheit (12) Bedienelemente für wählbare Funktionsmodule aufweist.

9. Vorrichtung nach einem der vorhergehenden Ansprüche, dadurch gekennzeichnet, daß die Zentraleinheit (12) direkt mit einem Bedienmodul (42) kombinierbar ist.

10. Vorrichtung nach Anspruch 9, dadurch gekennzeichnet, daß das Bedienmodul (42) mit der Zentraleinheit (12) lösbar verbindbar ist.

11. Vorrichtung nach einem der Ansprüche 9 und 10, dadurch gekennzeichnet, daß das Bedienmodul (42) über eine Standard-Schnittstelle mit der Zentraleinheit (12) elektrisch leitend verbindbar ist.

12. Vorrichtung nach einem der Ansprüche 1 oder 9, dadurch gekennzeichnet, daß das Fahrerinformationsmodul (40) und/oder das Bedienmodul (42) ausgehend von einer Basisvariante modular entsprechend einer wählbaren Ausstattungsvariante des Kraftfahrzeuges erweiterbar ist.

13. Vorrichtung nach einem der vorhergehenden Ansprüche, dadurch gekennzeichnet, daß als Funktionsmodul ein Airbag-Modul (44) vorgesehen ist, das eine Steuerung sämtlicher Sicherheitsfunktionen des Kraftfahrzeuges über das Bus-System (62, 66) übernimmt.

14. Vorrichtung nach Anspruch 13, dadurch gekennzeichnet, daß das Airbag-Modul (44) wenigstens einen Beschleunigungssensor und eine Zündschaltung für die die Sicherheitsfunktionen auslösenden Funktionsmodule enthält.

15. Vorrichtung nach einem der Ansprüche 13 oder 14, dadurch gekennzeichnet, daß über das Airbag-Modul (44) Steuersignale mit hoher Priorität in das Bus-System (62, 66) eingebbar sind, die eine Abarbeitung von Steuersignalen (Bus-Protokolle) mit normaler Priorität stoppt.

16. Vorrichtung nach einem der vorhergehenden Ansprüche 13 bis 15, dadurch gekennzeichnet, daß das Airbag-Modul (44) ein mit dem Bus-System (62, 66) in Verbindung stehendes Speicherelement (45) enthält.

17. Vorrichtung nach Anspruch 16, dadurch gekennzeichnet, daß das Speicherelement (45) die über das Bus-System (62, 66) übertragenen Bus-Protokolle abspeichert.

18. Vorrichtung nach einem der vorhergehenden Ansprüche 16 oder 17, dadurch gekennzeichnet, daß das Speicherelement (45) die übertragenen Bus-Protokolle in einer wählbaren Zeiteinheit abspeichert, wobei die vorher gespeicherten Bus-Protokolle überschrieben werden.

19. Vorrichtung nach einem der vorhergehenden Ansprüche 16 oder 17, dadurch gekennzeichnet, daß das Speicherelement (45) allgemeine Betriebsdaten des Kraftfahrzeugs abspeichert.

20. Vorrichtung nach einem der Ansprüche 13 bis 19, dadurch gekennzeichnet, daß der Airbag-Sensor (44) eine Schnittstelle (106) aufweist, über die eine externe Diagnose und/oder externe Einstellung der Zentraleinheit (12) und/oder der Funktionsmodule möglich ist.

21. Vorrichtung nach einem der vorhergehenden Ansprüche, dadurch gekennzeichnet, daß über das Bus-System (62, 66) ein Fahrzeugidentifikationscode in die Zentraleinheit (12) und/oder die Funktionsmodule eingebbar ist.

22. Vorrichtung nach einem der vorhergehenden Ansprüche, dadurch gekennzeichnet, daß die über das Bussystem (62, 66) mit der Zentraleinheit (12) verbundenen Funktionsmodule einen fahrzeugspezifischen Identifikationscode enthalten.

23. Vorrichtung nach Anspruch 22, dadurch gekennzeichnet, daß der fahrzeugspezifische Identifikationscode von nachträglich an das Bussystem (62, 66) anschließbaren Funktionsmodulen über das Bussystem (62, 66) lernbar, jedoch ausschließlich in dem Bussystem (62, 66) eines bestimmten Kraftfahrzeugs verwendbar ist.

24. Vorrichtung nach einem der vorhergehenden Ansprüche 21 bis 23, dadurch gekennzeichnet, daß der Fahrzeugidentifikationscode mittels eines externen PIN-Code umprogrammierbar ist.

25. Vorrichtung nach einem der vorhergehenden Ansprüche 21 bis 23, dadurch gekennzeichnet, daß über den Fahrzeugidentifikationscode eine Diebstahlsicherung des Kraftfahrzeugs integrierbar ist, indem das Bus-System (62, 66) zumindestens teilweise über wenigstens ein Funktionsmodul (96) blockierbar ist.

## Claims

1. Device having function modules (22, 24, 26, 28, 30, 32, 40, 42, 44, 46, 48, 50, 52, 56, 58, 70, 72, 74, 76, 78, 80, 82, 84, 86, 88, 90, 96, 98) arranged in a motor vehicle, it being possible for a central unit (12) to be connected via a bus system (62, 66) to the function modules and for the function modules to be interconnected, characterized in that the central unit (12) is coupled to a driver information module (40) directly via mechanical connections.

2. Device according to Claim 1, characterized in that the mechanical connections are of detachable construction.

3. Device according to one of the preceding claims, characterized in that the bus system (62, 66) and a network (38) are jointly formed by a standard cable harness to which additional function modules can be connected via existing back-up cabling.

4. Device according to one of the preceding claims, characterized in that voltage signals available via the bus system (62, 66) and/or the network (38) can be used simultaneously by various different function modules.

5. Device according to one of the preceding claims, characterized in that a selectable number of function modules can be connected to the bus system (62, 68).

6. Device according to one of the preceding claims, characterized in that the central unit (12) contains a voltage-conditioning circuit (36) for the function modules which are connected to the central unit (12) via the network (38).

7. Device according to one of the preceding claims, characterized in that the central unit (12) contains fuses (20) for function modules (high-current consumers) which can be connected to the central unit (12).

8. Device according to one of the preceding claims, characterized in that the central unit (12) has operating elements for selectable function modules.

9. Device according to one of the preceding claims, characterized in that the central unit (12) can be combined directly with an operating module (42).

10. Device according to Claim 9, characterized in that the operating module (42) can be detachably connected to the central unit (12).

11. Device according to one of Claims 9 and 10, characterized in that the operating module (42) can be connected in an electrically conducting fashion to the central unit (12) via a standard interface.

12. Device according to one of Claims 1 or 9, characterized in that, starting from a basic variant, the driver information module (40) and/or the operating module (42) can be expanded in a modular fashion in accordance with a selectable equipment variant of the motor vehicle.

13. Device according to one of the preceding claims, characterized in that provided as function module is an airbag module (44) which takes over control of all the safety functions of the motor vehicle via the bus system (62, 66).

14. Device according to Claim 13, characterized in that the airbag module (44) contains at least one acceleration sensor and a starter circuit for the function modules triggering the safety functions.

15. Device according to one of Claims 13 or 14, characterized in that it is possible to use the airbag module (44) to input into the bus system (62, 66) control signals with a high priority which stop the processing of the control signals (bus protocols) with normal priority.

16. Device according to one of the preceding Claims 13 to 15, characterized in that the airbag module (44) contains a memory element (45) connected to the bus system (62, 66).

17. Device according to Claim 16, characterized in that the memory element (45) stores the bus protocols transmitted via the bus system (62, 66).

18. Device according to one of the preceding Claims 16 or 17, characterized in that the memory element (45) stores the transmitted bus protocols in a selectable time unit, the previously stored bus protocols being overwritten.

19. Device according to one of the preceding Claims 16 or 17, characterized in that the memory element (45) stores general operating data of the motor vehicle.

20. Device according to one of Claims 13 to 19, characterized in that the airbag sensor (44) has an interface (106) via which an external diagnosis and/or external setting of the central unit (12) and/or the function modules are possible.

21. Device according to one of the preceding claims, characterized in that a vehicle identification code can be input into the central unit (12) and/or the function modules via the bus system (62, 66).

22. Device according to one of the preceding claims, characterized in that the function modules which are connected to the central unit (12) via the bus system (62, 66) contain a vehicle-specific identification code.

23. Device according to Claim 22, characterized in that the vehicle-specific identification code can be used by function modules, which can be connected subsequently to the bus system (62, 66), via the bus system (62, 66) in a learnable fashion, but exclusively in the bus system (62, 66) of a specific motor vehicle.

24. Device according to one of the preceding Claims 21 to 23, characterized in that the vehicle identification code can be reprogrammed by means of an external PIN code.

25. Device according to one of the preceding Claims 21 to 23, characterized in that an anti-theft system of the motor vehicle can be integrated via the vehicle identification code by virtue of the fact that the bus system (62, 66) can be blocked at least partially via at least one function module (96).

## Revendications

1. Dispositif comprenant des modules de fonctions (22, 24, 26, 28, 30, 32, 40, 42, 44, 46, 48, 50, 52, 56, 58, 70, 72, 74, 76, 78, 80, 82, 84, 86, 88, 90, 96, 98) qui sont disposés dans un véhicule à moteur, une unité centrale (12) pouvant être reliée au moyen d'un système de bus (62, 66) aux modules de fonctions, et les modules de fonctions, pouvant être reliés entre eux,
caractérisé en ce que
l'unité centrale (12) est couplée directement avec un module (40) d'information du conducteur, au moyen de liaisons mécaniques.

2. Dispositif selon la revendication 1,
caractérisé en ce que
les liaisons mécaniques sont constituées de façon amovible.

3. Dispositif selon l'une des revendications précédentes,
caractérisé en ce que
le système de bus (62, 66) et un réseau de lignes (38) sont constitués en commun par un faisceau de câbles standard auquel on peut raccorder, au moyen d'un câblage existant en réserve, des modules de fonctions supplémentaires.

4. Dispositif selon l'une des revendications précédentes,
caractérisé en ce que
au moyen du système de bus (62, 66) et/ou du réseau de lignes (38), on peut utiliser en même temps des signaux de tension de différents modules de fonctions

5. Dispositif selon l'une des revendications précédentes,
caractérisé en ce que
l'on peut raccorder au système de bus (62, 66) le nombre que l'on veut de modules de fonctions.

6. Dispositif selon l'une des revendications précédentes,
caractérisé en ce que
l'unité centrale (12) contient un circuit (36) de préparation de tension pour les modules de fonctions qui sont reliés au moyen du réseau de lignes (38) à l'unité centrale (12).

7. Dispositif selon l'une des revendications précédentes,
caractérisé en ce que
l'unité centrale (12) contient des fusibles (20) pour les modules de fonctions (consommateurs de courants à forte intensité) qui peuvent être raccordés à l'unité centrale (12).

8. Dispositif selon l'une des revendications précédentes,
caractérisé en ce que
l'unité centrale (12) présente des éléments de manoeuvre pour les modules de fonctions que l'on peut choisir.

9. Dispositif selon l'une des revendications précédentes,
caractérisé en ce que
l'unité centrale (12) est directement combinée avec un module de manoeuvre (42).

10. Dispositif selon l'une des revendications précédentes,
caractérisé en ce que
le module de manoeuvre (42) peut être relié de manière amovible à l'unité centrale (12).

11. Dispositif selon l'une des revendications 9 et 10,
caractérisé en ce que
le module de manoeuvre (42) peut être relié à l'unité centrale (12) au moyen d'une interface standard, de façon électriquement conductrice.

12. Dispositif selon l'une des revendications 9 et 10,
caractérisé en ce que
le module (40) d'information du conducteur et/ou le module de manoeuvre (42) peut être développé de façon modulaire en partant d'une variante de base en fonction d'une variante d'équipement du véhicule à moteur que l'on peut choisir.

13. Dispositif selon l'une des revendications 9 et 10,
caractérisé en ce que
l'on prévoit comme module de fonctions un module de coussin d'air (44) qui assure une commande de l'ensemble des fonctions de sécurité par l'intermédiaire du système de bus (62, 66).

14. Dispositif selon la revendication 13,
caractérisé en ce que
le module de coussin d'air (44) contient au moins un détecteur d'accélération et une commande d'allumage pour les modules de fonctions qui déclenchent les fonctions de sécurité.

15. Dispositif selon l'une des revendications 13 ou 14,
caractérisé en ce qu'
on peut envoyer, au moyen du module ce coussin d'air (44) des signaux de commande avec une priorité élevée dans le système de bus (62, 66), pour stopper un traitement des signaux de commande (protocoles de bus) à priorité normale.

16. Dispositif selon l'une des revendications précédentes 13 à 15,
caractérisé en ce que
le module de coussin d'air (44) contient un élément de stockage (45) qui est en liaison avec le système de bus (62, 66).

17. Dispositif selon la revendication 16,
caractérisé en ce que
l'élément de stockage (45) met en mémoire les protocoles de bus transmis au moyen du système de bus (62, 66).

18. Dispositif selon l'une des revendications précédentes 16 ou 17,
caractérisé en ce que
l'élément de stockage (45) met en mémoire les protocoles de bus transmis pendant une unité de temps que l'on peut choisir, les protocoles de bus mis en mémoire auparavant étant recouverts.

19. Dispositif selon l'une des revendications précédentes 16 ou 17,
caractérisé en ce que
l'élément de stockage (45) met en mémoire les données générales de fonctionnement du véhicule à moteur.

20. Dispositif selon l'une des revendications précédentes 13 à 19,
caractérisé en ce que
le détecteur de coussin d'air (44) présente une interface (106) au moyen de laquelle il est possible d'avoir un diagnostic externe et/ou un réglage externe de l'unité centrale (12) et ou des modules de fonctions.

21. Dispositif selon l'une des revendications précédentes,
caractérisé en ce que
l'on peut entrer, au moyen du système de bus (62, 66) un code d'identification du véhicule dans l'unité centrale (12) et/ou dans les modules de fonctions.

22. Dispositif selon l'une des revendications précédentes,
caractérisé en ce que
les modules de fonctions, qui sont reliés au moyen du système de bus (62, 66) à l'unité centrale (12), contiennent un code d'identification spécifique du véhicule.

23. Dispositif selon la revendication 22,
caractérisé en ce que
le code d'identification spécifique du véhicule peut être appris au moyen du système de bus (62, 66) par des modules fonctionnels qui peuvent être raccordés après coup au système de bus (62, 66), mais toutefois ne peut être utilisé exclusivement que dans le système de bus (62, 66) d'un véhicule détermine.

24. Dispositif selon l'une des revendications précédentes 21 à 23,
caractérisé en ce que
le code d'identification du véhicule peut être reprogrammé différemment au moyen d'un code PIN externe.

25. Dispositif selon l'une des revendications précédentes 21 à 23,
caractérisé en ce qu'
on peut intégrer, au moyen du code d'identification du véhicule, une sécurité contre le vol du véhicule, le système de bus (62, 66) pouvant être bloqué au moins en partie par au moins un module de fonctions (96).
